# EUROPEAN PATENT SPECIFICATION

(11) **EP 3 438 420 B1**
(45) Date of publication and mention of the grant of the patent: **12.01.2022**
(21) Application number: 16896614.1
(22) Date of filing: 02.12.2016
(51) Int. Cl.: F01D 21/00, F01D 21/04, F01D 21/08, F01D 25/16

(54) **AERO-ENGINE AND FUSING METHOD THEREOF UNDER FAN BLADE OUT LOAD**
FLUGTRIEBWERK UND VERSCHMELZUNGSVERFAHREN DAVON UNTER BELASTUNG BEI FANSCHAUFELVERLUST
MOTEUR AÉRONAUTIQUE ET PROCÉDÉ DE FUSIONNEMENT DUDIT MOTEUR SOUS SOLLICITATION POUR PERTE D'AUBE DE SOUFFLANTE

(30) Priority: 28.03.2016 CN 201610183546
(43) Date of publication of application: 06.02.2019
(73) Proprietor: Aecc Commercial Aircraft Engine Co., Ltd., Shanghai 200241 (CN)
(72) Inventor: CHAI, Xianghai, Shanghai 200241 (CN); WEI, Yong, Shanghai 200241 (CN); WANG, Shaohui, Shanghai 200241 (CN); SONG, Huiying, Shanghai 200241 (CN); HOU, Liang, Shanghai 200241 (CN)
(74) Representative: Bonini, Ercole
(86) International application number: PCT/CN2016/108342
(87) International publication number: WO 2017/166846

(56) References cited:
- EP-A2- 1 596 038
- WO-A1-2015/080797
- CA-A1- 2 861 291
- CN-A- 103 775 212
- GB-A- 2 360 069
- US-A- 5 974 782
- US-A1- 2005 232 755
- US-B1- 6 447 248
- US-B2- 6 783 319

## Description

### Field of the Invention

The invention relates to an aero-engine, particularly to a fusing structure and a fusing method for a bearing support structure of an aero-engine.

### Background Art

Aero-engines may be hit by foreign objects such as birds, leading to that one or more fan blades break off or fall off, namely FBO (Fan Blade Off). After the FBO event occurs, the gravity center of the fan will deviate from the centerline of the low pressure rotor. However, due to the limitation of the bearings, the fan still rotates about the centerline of the low pressure rotor. Rotation of the fan about an axis that deviates from its gravity center would motivate the low pressure rotor system to generate one or more oscillating modes, thereby causing an unbalanced load. For the high bypass ratio turbofan engine commonly used in commercial aircraft, the fan blade has a long radius and a large mass, and the FBO event would cause the gravity-center line of the fan to misalign the centerline of the engine, resulting in a huge unbalanced load. Since the bearings constrain the fan rotor radially, the FBO unbalanced load is transmitted to the intermediate case mainly via the bearings and their support structures, and is further transmitted to the installation section or even the aircraft.

Document EP1596038 describes an aero-engine, comprising a fan rotor, a stator part intermediate case, a first bearing and a second bearing supporting the fan rotor, a first support cone wall supporting the first bearing on the stator part intermediate case, and a second support wall supporting the second bearing on the stator part intermediate case, the first support cone wall being of a thin-wall annular structure and comprising an upper cone wall having an upper junction surface and a lower cone wall having a lower junction surface. US5974782 describes a method for enabling the operation of an aircraft turbo-engine to be continued in spite of the accidental occurrence of an unbalance in a rotor of the engine, such as it may be caused by the breakage of a fan blade. Document US6447248 describes a bearing support including a hollow cone diverging between a forward bearing seat and an aft mounting flange. The cone includes an integral annular fuse sized in thickness to fail in shear under an abnormal imbalance load transfer between a gas turbine engine fan supported by a bearing in the forward seat and a fan frame mounted on the aft flange.

GB2360069 discloses a ducted fan gas turbine engine comprising a fan mounted on a first shaft and a compressor mounted on a second shaft. A first bearing carries the upstream part of the first shaft and the second bearing carries the upstream part of the second shaft. Both bearings are attached to a structure which comprises an axial sleeve, a front frustoconical portion and a rear radially stiff but axially flexible frustoconical portion, the structure being attached to the engine casing. The front frustoconical portion is frangibly attached to the front part of the axial sleeve at abutting frustro-spherical faces. In the event of damage to the fan the frangible connection breaks and the first shaft is allowed to orbit about the engine longitudinal axis. The rear portion is swashingly non-linear flexible and accommodates the out of balance radial loads transferred to it as couples during such an incident.

CN103775212 describes a fan failure braking device of an aero-engine which comprises a fan shaft, a fan blade, a bearing support piece and a bearing component, wherein a rotor brake disc is arranged on the fan shaft; the fan blade is mounted on the fan shaft; one end of the bearing support piece is mounted on an aero-engine casing, the bearing support piece is provided with a stator brake disc which circumferentially surrounds the rotor brake disc and is radially spaced from the rotor brake disc; one end of the bearing component is coupled with the other end of the fan shaft, and connected with the bearing support piece by a predetermined bending moment; when the fan blade fractures, the fan shaft deflects outwards, so that when the mutation bending moment between the bearing component and the bearing support piece exceeds the predetermined bending moment, the bearing component and the bearing support piece are disconnected, and thus the rotor brake disc and the stator brake disc are jointed. When the fan blade fails and fractures, a rub-impact occurs between the rotor brake disc and the stator brake disc, limits the radial displacement of bending of the fan shaft and reduces the rotational speed of the fan shaft and the FBO (Fan Blade Out) load.

Document CA2861291 discloses a double frangible bearing support structure supporting a low pressure rotor of an aircraft engine. The support structure has a first bearing assembly including a first bearing supported by a first bearing support adapted to buckle or frange when subject to a predetermined critical load resulting from an abnormal rotor imbalance. The support structure has a second bearing assembly comprising a second bearing having rolling elements disposed between inner and outer races. The outer race is connected to a second bearing support by means of frangible bolts adapted to fail when subject to a predetermined critical load resulting from radial displacements and loads of the low pressure rotor following decoupling/franging at the first bearing support.

Patent application WO2015080797 describes a fan blade for a turbofan gas turbine engine. The fan blade includes a body having a pressure side and a suction side and a cover. The suction side of the body includes an opening and at least one cavity for purposes of reducing the weight of the fan blade. The cover overlays the opening and includes a peripheral edge that is received in a slot defined by the body. The cavities are filled with a filler material that may form a permanent part of the fan blade.

US2005232755 discloses a turbomachine comprising at least a first rotary assembly with a first shaft, a stator, and bearings secured to the stator and suitable for supporting the first shaft, one of said bearings being capable of giving way when an unbalance occurs in the first rotary assembly. The turbomachine further comprises brake means for braking the first shaft when the unbalance occurs, and bond means acting at the end of the braking to bond a portion of the first shaft to a surrounding portion of the turbomachine. The turbomachine is intended to be used mainly in the field of aviation, and more particularly as an airplane turbojet.

Finally, US6783319 describes a bearing assembly for a gas turbine engine rotor including a paired race, a bearing, a mounting joint, and a plurality of mechanical fuses. The paired race includes an outer race and an inner race. The bearing is between the inner and outer races, and is configured to support the rotor on a support frame. The mounting joint includes a joint inner race and a joint outer race. At least one of the joint inner race and the joint outer race includes a spherical surface. The mounting joint is configured to reduce dynamic loads to the gas turbine engine structure and static bending to the rotor. The plurality of mechanical fuses extends through at least one of the joint inner race and the joint outer race.

### Summary

It is an object of the invention to provide an aero-engine and a fusing method thereof under a fan blade out load, to ensure the safety of the engine structure under the FBO load.

According to the invention, an aero-engine as set out in claim 1 is provided.

In one embodiment, on a radially outer side of the upper junction surface, the upper cone wall is provided with a stop boss, for limiting the displacement of the lower cone wall when the fusing structure fails.

In one embodiment, the concave spherical surface and the convex spherical surface are welded by a diffusion bonding process.

According to the invention, a fusing method as set out in claim 4 is provided.

In one embodiment, the method further provides a stop boss on a radially outer side of the upper junction surface, for limiting the displacement of the lower cone wall with the stop boss when the fusing structure fails.

In one embodiment, the concave spherical surface and the convex spherical surface are welded by a diffusion bonding process.

In one embodiment, based on a load caused by the fan blade out load at the first support cone wall, an amount of slip between the junction surfaces after the fan blade out load occurs is controlled by adjusting structural parameters of the fusing structure.

In one embodiment, the structural parameters include an area, a spherical radius, a spherical arc angle of the junction surfaces, and/or a position of the stop boss.

The advantageous effects of the invention comprise:
1. Since the fusing structure is a spherical connection structure between the upper and lower cone walls, when the FBO occurs, the first support cone wall can fail under conditions such as shear force, tensile force and complex load, and, the weakened amount and proportion of the radial load and the bending load can be adjusted by designing structural parameters such as spherical radius and spherical arc angle, which has higher flexibility in structure design;
2. By adopting the failure structure design at the location of the first support cone wall, it can obtain the effect which may be achieved by the first bearing support primary fusing and the second bearing support secondary fusing, not only ensuring the safety of the engine structure under the FBO load, but also being able to simplify the structure design as much as possible and improve the design reliability.

### BRIEF DESCRIPTION OF THE DRAWINGS

The above and other features, characteristics and advantages of the invention will become more apparent from the following description in conjunction with the figures and embodiments, wherein:
- Fig. 1 is a schematic view showing the front-end structure of an engine in one embodiment of the invention;
- Fig. 2 is a schematic view showing the fusing structure of the first support cone wall before failure in one embodiment of the invention;
- Fig. 3 is a schematic view showing the fusing structure of the first support cone wall after failure in one embodiment of the invention.

### DETAILED DESCRIPTION

The invention is further described below in conjunction with the specific embodiments and figures, and more details are set forth in the following description, so as to make the invention be fully understood. However, obviously, the invention is able to be implemented in a variety of other ways than described herein, and the skilled in the art can make similar promotion and deduction based on the actual application without violating the meaning of the invention. Therefore, the protection scope of the invention should not be limited by the content of the specific embodiments.

It should be noted that, the figures are only examples, which are not drawn on the basis of the conditions of equal scales, and this should not be taken as limitations of the protection scope to be actually claimed by the invention.

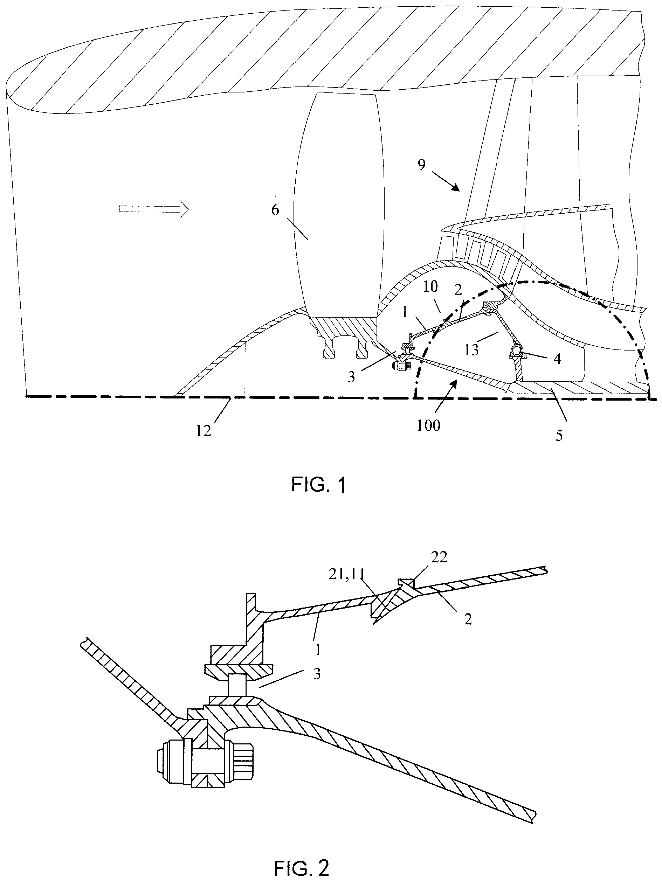

As shown in Fig. 1 and Fig. 2, the aero-engine includes a fan rotor **100**, a stator part intermediate case **9**, a first bearing **3** and a second bearing **4** supporting the fan rotor **100**, a first support cone wall **10** supporting the first bearing **3** on the stator part intermediate case **9**, and a second support wall 13 supporting the second bearing **4** on the stator part intermediate case **9**. The first support cone wall **10** is of a thin-wall annular structure and comprises an upper cone wall **2** and a lower cone wall **1**. The upper cone wall **2** has an upper junction surface **21**, and the lower cone wall **1** has a lower junction surface **11**. The upper junction surface **21** or the lower junction surface **11** is a concave spherical surface while the other one is a convex spherical surface. The upper junction surface **21** and the lower junction surface **11** are complementary and welded into a fusing structure with strength being lower than that of a parent material. The spherical surface center of the fusing structure is located at the axis **12** of the fan rotor **100**. The first bearing **3** is also called as **1#** bearing in the industry, and the second bearing **4** is also called as **2#** bearing in the industry.

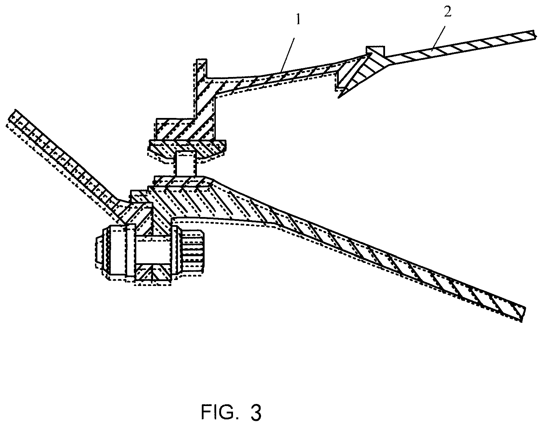

The fan rotor **100** comprises a fan shaft 5 and fan blades **6**, the load of which is transmitted to the first support cone wall **10** and the second support wall **13**, via the first bearing **3** and the second bearing **4**, and then transmitted to the stator part intermediate case **9**. As shown in Fig. 3, after the FBO occurs, the fusing structure fails, a relative slip occurs between the upper and lower junction surfaces **21**, **11**.

On a radially outer side of the upper junction surface **21**, the upper cone wall **2** is provided with a stop boss **22**, for limiting the displacement of the lower cone wall **1** when the fusing structure fails. In another embodiment, the stop boss **22** can be provided on the lower cone wall, for limiting the displacement of the upper cone wall **2** when the fusing structure fails.

The welding between the upper junction surface **21** and the lower junction surface **11** can be performed by, but not limited to, a diffusion bonding process. No matter what kind of process is adopted, it is ensured that the strength of the connection interface between the two junction surfaces is lower than the strength of the parent material, and different weld failure threshold values can be obtained by controlling of process parameters, to guarantee that the first support cone wall fails under the expected conditions when the FBO occurs. After the FBO occurs, the fusing structure constituted by connection of the spherical surfaces fails, and a slip is caused between the upper junction surface **21** and the lower junction surface **11** (that is, the two spherical connection surfaces) under the FBO load, reducing the radial load and the bending load, and, making the fan shaft **5** (alternatively, the low-pressure rotation shaft) get close to its new gravity-center line, and in the meantime, due to the limitation of the spherical connection interface, the constrain of the first bearing **3** on the fan shaft **5** in the axial direction can be continuously maintained. In addition, based on the load caused by the FBO load at the first support cone wall, such as shear force and tensile force, the parameters of the fusing structure can be adjusted, such as the area, the spherical radius, the spherical arc angle of the spherical connection surfaces and the position of the stop boss **22**, controlling the amount of slip between the diffusion bonding interfaces after the FBO occurs, such that large radial deformation wound not be caused in the fan shaft **5** instantaneously, which leads to that, radial oscillation deformation occurs in the rotor, the seal ring of the bearing component is damaged, and the oil for lubrication and cooling of the component is leaked, thereby leading to that, the overheating occurs during the bearing rotates and the phenomenon of jamming occurs.

Diffusion bonding refers to that, under the influence of high temperature and pressure, the material surfaces contacting each other approach one another at the contact surface, the plastic deformation occurs locally, and interatomic diffusion occurs, so a new diffusion layer is formed in the interface, thereby forming a reliable joint. The diffusion bonding is generally divided into three stages. In the first stage, it relates to physical contact. Deformation occurs and an interface is formed. In the second stage, it relates to local chemical reaction. Interatomic interaction occurs, forming metal bonds, ionic bonds and covalent bonds, accompanied by grain boundary migration and pore reduction. In the third stage, it relates to that, the contact portion forms a coupling layer. The layer develops toward the direction of the volume, eventually forming a reliable joint.

In one embodiment of the invention, first, based on the design structure of the fusing structure of the first support cone wall, the upper cone wall 2 and the lower cone wall 1 are obtained by machining, and then the upper and lower cone walls 2, 1 are put into a pressing machine with a heating system and are heated to the design temperature. The pressing machine is filled with inert gas with a certain pressure, and then the temperature and the pressure are maintained to make the spherical fitting surfaces between the two cone walls be diffusely bonded.

One of the conventional fusing designs is to adopt the support failure of the first bearing, in which, releasing the radial stiffness of the first bearing can make the low pressure rotation shaft rotate about an axis that is close to its new gravity-center line, and, the FBO unbalanced load is reduced without increasing engine weight and volume. However, releasing the radial constraint of the first bearing would make a radial oscillation occur in the rotor, which easily damages the seal ring of the bearing component, thereby making the oil for lubrication and cooling of the component be leaked. It easily leads to that the overheating occurs during the bearing rotates and the phenomenon of jamming occurs, and leads to that the engine can't rotate normally.

The second one of the traditional fusing designs is to include the support primary fusing of the first bearing and the support secondary fusing of the second bearing. It can solve the problem caused by only adopting the support failure of the first bearing, but it would lead to a complexity of the support structures of the first bearing and the second bearing. Furthermore, it requires that the support of the second bearing can't be completely fused, which otherwise would leads to that, the high and low pressure rotors collide and rub, and the vibration in the windmill rotation stage is increased. However, due to some reasons such as processing and assembly errors, there is uncertainty in that the load is redistributed after the primary fusing structure breaks, which leads to difficulty in calculating the secondary fusing threshold value, and this may leads to that the structure fails not as expected.

The spherical connection interface between the upper and lower junction surfaces **21**, **11** of the first support cone wall in the foregoing embodiments can make the first support cone wall have a certain self-repair function, and can leads to that, the axis **12** of the fan shaft **5** returns toward the centerline of the engine after the FBO peak impact load occurs, thereby reducing the unbalanced load and vibration amplitude of the fan rotor **100**.

In the foregoing embodiments, when the FBO occurs, the first support cone wall can fail under conditions such as shear force, tensile force and complex load, and, the weakened amount and proportion of the radial load and the bending load can be adjusted by designing structural parameters such as spherical radius and spherical arc angle, which has higher flexibility in structure design.

Moreover, by adopting the failure structure design at the location of the first support cone wall, it can obtain the effect which may be achieved by the support primary fusing of the first bearing and the support secondary fusing of the second bearing, not only ensuring the safety of the engine structure under the FBO load, but also being able to simplify the structure design as much as possible and improve the design reliability.

## Claims

1. An aero-engine, comprising a fan rotor (100), a stator part intermediate case (9), a first bearing (3) and a second bearing (4) supporting the fan rotor (100), a first support cone wall (10) supporting the first bearing (3) on the stator part intermediate case (9), and a second support wall (13) supporting the second bearing (4) on the stator part intermediate case (9), the first support cone wall (10) being of a thin-wall annular structure and comprising an upper cone wall (2) having an upper junction surface (21) and a lower cone wall (1) having a lower junction surface (11), **characterized in that** the upper junction surface (21) or the lower junction surface (11) is a concave spherical surface while the other one is a convex spherical surface; the upper junction surface (21) and the lower junction surface (11) are complementary and welded into a fusing structure with strength being lower than that of a parent material, a center of a spherical surface of the fusing structure being located at an axis (12) of the fan rotor (100).

2. The aero-engine according to claim 1, **characterized in that,** on a radially outer side of the upper junction surface (21), the upper cone wall (2) is provided with a stop boss (22), for limiting the displacement of the lower cone wall (1) when the fusing structure fails.

3. The aero-engine according to claim 1, **characterized in that** the concave spherical surface and the convex spherical surface are welded by a diffusion bonding process.

4. A fusing method of an aero-engine under a fan blade out load, wherein the aero-engine comprises a fan rotor (100), a stator part intermediate case (9), a first bearing (3) and a second bearing (4) supporting the fan rotor (100), a first support cone wall (10) supporting the first bearing (3) on the stator part intermediate case (9), and a second support wall (13) supporting the second bearing (4) on the stator part intermediate case (9), the method separating the first support cone wall (10) of a thin-wall annular structure into an upper cone wall (2) and a lower cone wall (1) at a predetermined fusing location and providing the upper cone wall (2) and the lower cone wall (1) at the same circular conical plane, **characterized in that** the method then welds an upper junction surface (21) of the upper cone wall (2) and a lower junction surface (11) of the lower cone wall (1), the upper junction surface (21) or the lower junction surface (11) being a concave spherical surface while the other one being a convex spherical surface; the upper junction surface (21) and the lower junction surface (11) are complementary and welded into a fusing structure with strength being lower than that of a parent material, a center of a spherical surface of the fusing structure being located at an axis (12) of the fan rotor (100).

5. The fusing method according to claim 4, **characterized in that** the method further provides a stop boss (22) on a radially outer side of the upper junction surface (21), for limiting the displacement of the lower cone wall (1) with the stop boss (22) when the fusing structure fails.

6. The fusing method according to claim 4, **characterized in that** the concave spherical surface and the convex spherical surface are welded by a diffusion bonding process.

7. The fusing method according to claim 5, **characterized in that,** based on a load caused by fan blade out load at the first support cone wall (10), an amount of slip between the junction surfaces after the fan blade out load occurs is controlled by adjusting structural parameters of the fusing structure.

8. The fusing method according to claim 7, **characterized in that** the structural parameters include an area, a spherical radius, a spherical arc angle of the junction surfaces, and/or a position of the stop boss (22).

## Patentansprüche

1. Flugtriebwerk mit einem Gebläserotor (100), einem Statorteil-Zwischengehäuse (9), einem ersten Lager (3) und einem zweiten Lager (4), die den Gebläserotor (100) tragen, einer ersten Stützkonuswand (10), die das erste Lager (3) am Statorteil-Zwischengehäuse (9) trägt, und einer zweiten Stützwand (13), die das zweite Lager (4) am Statorteil-Zwischengehäuse (9) trägt, wobei die erste Stützkonuswand (10) eine dünnwandige Ringstruktur aufweist und eine obere Konuswand (2) mit einer oberen Verbindungsfläche (21) und eine untere Konuswand (1) mit einer unteren Verbindungsfläche (11) umfasst, **dadurch gekennzeichnet, dass** die obere Verbindungsfläche (21) oder die untere Verbindungsfläche (11) eine konkave sphärische Oberfläche ist, während die andere eine konvexe sphärische Oberfläche ist; die obere Verbindungsfläche (21) und die untere Verbindungsfläche (11) komplementär sind und zu einer Schmelzstruktur mit einer Festigkeit verschweißt sind, die geringer ist als die eines Grundmaterials, wobei ein Zentrum einer sphärischen Oberfläche der Schmelzstruktur an einer Achse (12) des Gebläserotors (100) angeordnet ist.

2. Flugtriebwerk nach Anspruch 1, **dadurch gekennzeichnet, dass** die obere Konuswand (2) an einer radial äußeren Seite der oberen Verbindungsfläche (21) mit einem Anschlagvorsprung (22) versehen ist, um die Verschiebung der unteren Konuswand (1) zu begrenzen, wenn die Schmelzstruktur versagt.

3. Flugtriebwerk nach Anspruch 1, **dadurch gekennzeichnet, dass** die konkave sphärische Oberfläche und die konvexe sphärische Oberfläche durch ein Diffusionsklebeverfahren verschweißt sind.

4. Verfahren zum Schmelzen eines Flugtriebwerks unter einer Gebläseschaufelbelastung, wobei das Flugtriebwerk einen Gebläserotor (100), ein Statorteil-Zwischengehäuse (9), ein erstes Lager (3) und ein zweites Lager (4), die den Gebläserotor (100) tragen, eine erste Stützkonuswand (10), die das erste Lager (3) an dem Statorteil-Zwischengehäuse (9) trägt, und eine zweite Stützwand (13), die das zweite Lager (4) an dem Statorteil-Zwischengehäuse (9) trägt, umfasst, wobei das Verfahren die erste Stützkonuswand (10) einer dünnwandigen Ringstruktur an einer vorbestimmten Schmelzstelle in eine obere Konuswand (2) und eine untere Konuswand (1) trennt und die obere Konuswand (2) und die untere Konuswand (1) in der gleichen kreisförmigen Konusebene vorsieht, **dadurch gekennzeichnet, dass** das Verfahren dann eine obere Verbindungsfläche (21) der oberen Konuswand (2) und eine untere Verbindungsfläche (11) der unteren Konuswand (1) schweißt, wobei die obere Verbindungsfläche (21) oder die untere Verbindungsfläche (11) eine konkave sphärische Oberfläche ist, während die andere eine konvexe sphärische Oberfläche ist; wobei die obere Verbindungsfläche (21) und die untere Verbindungsfläche (11) komplementär sind und zu einer Schmelzstruktur mit einer Festigkeit verschweißt sind, die geringer ist als die eines Grundmaterials, wobei ein Zentrum einer sphärischen Oberfläche der Schmelzstruktur an einer Achse (12) des Gebläserotors (100) angeordnet ist.

5. Schmelzverfahren nach Anspruch 4, **dadurch gekennzeichnet, dass** das Verfahren ferner einen Anschlagvorsprung (22) an einer radial äußeren Seite der oberen Verbindungsfläche (21) vorsieht, um die Verschiebung der unteren Konuswand (1) mit dem Anschlagvorsprung (22) zu begrenzen, wenn die Schmelzstruktur versagt.

6. Schmelzverfahren nach Anspruch 4, **dadurch gekennzeichnet, dass** die konkave sphärische Oberfläche und die konvexe sphärische Oberfläche durch ein Diffusionsklebeverfahren verschweißt werden.

7. Schmelzverfahren nach Anspruch 5, **dadurch gekennzeichnet, dass** auf der Grundlage einer Belastung, die durch eine Gebläseschaufelbelastung an der ersten Stützkonuswand (10) verursacht wird, ein Ausmaß an Schlupf zwischen den Verbindungsflächen nach Auftreten der Gebläseschaufelbelastung durch Einstellen von Strukturparametern der Schmelzstruktur gesteuert wird.

8. Schmelzverfahren nach Anspruch 7, **dadurch gekennzeichnet, dass** die Strukturparameter eine Fläche, einen sphärischen Radius, einen sphärischen Bogenwinkel der Verbindungsflächen und/oder eine Position des Anschlagvorsprungs (22) einschließen.

## Revendications

1. Moteur aéronautique, comprenant un rotor de soufflante (100), un carter intermédiaire de partie de stator (9), un premier palier (3) et un second palier (4) portant le rotor de soufflante (100), une première paroi conique de support (10) portant le premier palier (3) sur le carter intermédiaire de partie de stator (9), et une seconde paroi de support (13) portant le second palier (4) sur le carter intermédiaire de partie de stator (9), la première paroi conique de support (10) étant d'une structure annulaire à paroi mince et comprenant une paroi conique supérieure (2) ayant une surface de jonction supérieure (21) et une paroi conique inférieure (1) ayant une surface de jonction inférieure (11), **caractérisé en ce que** la surface de jonction supérieure (21) ou la surface de jonction inférieure (11) est une surface sphérique concave tandis que l'autre est une surface sphérique convexe; la surface de jonction supérieure (21) et la surface de jonction inférieure (11) sont complémentaires et soudées en une structure fusible ayant une résistance mécanique qui est inférieure à celle d'un matériau parent, un centre d'une surface sphérique de la structure fusible étant situé au niveau d'un axe (12) du rotor de soufflante (100).

2. Moteur aéronautique selon la revendication 1, **caractérisé en ce que,** sur un côté radialement externe de la surface de jonction supérieure (21), la paroi conique supérieure (2) est munie d'un bossage d'arrêt (22), pour limiter le déplacement de la paroi conique inférieure (1) lorsque la structure fusible cède.

3. Moteur aéronautique selon la revendication 1, **caractérisé en ce que** la surface sphérique concave et la surface sphérique convexe sont soudées par un procédé de liaison par diffusion.

4. Procédé de fusion d'un moteur aéronautique sous une charge de perte d'aube de soufflante, dans lequel le moteur aéronautique comprend un rotor de soufflante (100), un carter intermédiaire de partie de stator (9), un premier palier (3) et un second palier (4) portant le rotor de soufflante (100), une première paroi conique de support (10) portant le premier palier (3) sur le carter intermédiaire de partie de stator (9), et une seconde paroi de support (13) portant le second palier (4) sur le carter intermédiaire de partie de stator (9), le procédé séparant la première paroi conique de support (10) d'une structure annulaire à paroi mince en une paroi conique supérieure (2) et une paroi conique inférieure (1) à un emplacement fusible prédéterminé et ménageant la paroi conique supérieure (2) et la paroi conique inférieure (1) au niveau du même plan conique circulaire, **caractérisé en ce que** le procédé soude ensuite une surface de jonction supérieure (21) de la paroi conique supérieure (2) et une surface de jonction inférieure (11) de la paroi conique inférieure (1), la surface de jonction supérieure (21) ou la surface de jonction inférieure (11) étant une surface sphérique concave tandis que l'autre étant une surface sphérique convexe; la surface de jonction supérieure (21) et la surface de jonction inférieure (11) sont complémentaires et soudées en une structure fusible ayant une résistance mécanique qui est inférieure à celle d'un matériau parent, un centre d'une surface sphérique de la structure fusible étant situé au niveau d'un axe (12) du rotor de soufflante (100).

5. Procédé de fusion selon la revendication 4, **caractérisé en ce que** le procédé ménage en outre un bossage d'arrêt (22) sur un côté radialement externe de la surface de jonction supérieure (21), pour limiter le déplacement de la paroi conique inférieure (1) avec le bossage d'arrêt (22) lorsque la structure fusible cède.

6. Procédé de fusion selon la revendication 4, **caractérisé en ce que** la surface sphérique concave et la surface sphérique convexe sont soudées par un procédé de liaison par diffusion.

7. Procédé de fusion selon la revendication 5, **caractérisé en ce que,** sur la base d'une charge provoquée par une charge de perte d'aube de soufflante au niveau de la première paroi conique de support (10), une quantité de glissement entre les surfaces de jonction après que la charge de perte d'aube de soufflante survient est régulée par l'ajustement de paramètres structurels de la structure fusible.

8. Procédé de fusion selon la revendication 7, **caractérisé en ce que** les paramètres structurels incluent une aire, un rayon sphérique, un angle d'arc sphérique des surfaces de jonction, et/ou une position du bossage d'arrêt (22).
